# EUROPEAN PATENT SPECIFICATION

(11) **EP 2 268 429 B1**
(45) Date of publication and mention of the grant of the patent: **31.08.2011**
(21) Application number: 09716367.9
(22) Date of filing: 05.03.2009
(51) Int. Cl.: B21F 23/00

(54) **FEEDING DEVICE AND METHOD FOR BARS**
VORRICHTUNG UND VERFAHREN ZUR ZUFÜHRUNG VON STÄBEN
DISPOSITIF D'ACHEMINEMENT POUR BARRES ET PROCÉDÉ D'ACHEMINEMENT RELATIF

(30) Priority: 07.03.2008 IT UD20080049
(43) Date of publication of application: 05.01.2011
(73) Proprietor: M.E.P. Macchine Elettroniche Piegatrici S.p.A., 33010 Reana del Rojale (UD) (IT)
(72) Inventor: DEL FABRO, Giorgio, I-33100 Udine (IT)
(74) Representative: Petraz, Davide Luigi
(86) International application number: PCT/IB2009/000444
(87) International publication number: WO 2009/109846

(56) References cited:
- EP-A- 0 790 086
- EP-A- 1 706 231
- WO-A-2007/101823
- DE-U1- 29 714 110

## Description

### FIELD OF THE INVENTION

The present invention concerns a feeder device for bars, able to be used advantageously in association with machines for working bars such as stirrup-making machines, bending machines, shaping machines, tying machines or other similar or comparable type of machine. In particular, the feeder device according to the invention is suitable to pick up, in a substantially automatic manner, one or more bars at a time from a bundle of bars and to dispose said one or more bars to be fed to the operating machine.

The invention also concerns the method that uses the feeder device.

### BACKGROUND OF THE INVENTION

Machines are known for working bars which work one or more bars at a time, for example to make shaped pieces for the building field or other type of product. The machines that use pre-cut bars normally have one or more feed zones in which a bundle is discharged and/or disposed, from which the bars to be sent to the machine are picked up on each occasion.

The operation to pick up and remove the individual bars from the bundle is often very difficult since the bars, which can even reach 12 m in length and more, are all pell-mell, twisted and tangled with each other. To remove one bar from the bundle, taking it by one end, requires a great deal of effort for the worker, with risks to his safety and a slow-down in the operating cycle, which reduces the productivity of the machine.

In documents EP-B-1706231, on which the preamble of claims 1 and 15 is based, and WO-A-2007/101823, the applicant has proposed automatic devices to feed bars to operating machines which use separate first and second magnetic pick-up means.

Such devices, even if they are very effective, sometimes have some problems, in the case of bars with average to small diameters, especially if they are ribbed.

In fact, with bars with an average to small diameter, known machines are not always able to guarantee with certainty the exact number of bars picked up, due to the fact that two bars can be picked up together, because they are overlapping or twisted, which creates problems in counting and hence in the correct feed of the right number of bars to the operating machine.

These shortcomings have the result that the operation to automatically feed the bars may have to be interrupted due to errors in the number of bars to be fed.

Purpose of the invention is to achieve a feeder device for bars, suitable to selectively pick up, in a substantially automatic manner, one or more bars at a time from a bundle of bars and to dispose them for feeding to an operating machine which will overcome and solve the shortcomings to be found in analogous devices in the state of the art.

Another purpose is to be able to operate on bars substantially of any diameter, and to ensure that they are counted without errors caused by overlapping or by the undesired pick-up of multiple bars.

Applicant has devised, tested and embodied the present invention to overcome these shortcomings and to obtain other advantages.

### SUMMARY OF THE INVENTION

The present invention is set forth and characterized in the main claims, while the dependent claims describe other innovative characteristics of the invention.

According to the invention, the device comprises first magnetic means, disposed substantially in cooperation with an end part, or near the end, of the bundle of bars from which the bar or bars are to be picked up, and second magnetic means able to cooperate with said first magnetic means in order to selectively pick up the bar or bars to be sent to the machine.

According to a characteristic feature of the present invention, the device according to the present invention also comprises third magnetic means, able to hold temporarily the bar or bars picked up by the first magnetic means, substantially forming a pick-up plane, in an intermediate step, from which the second magnetic means selectively pick up the bars to be sent to the machine.

In a preferential embodiment, the first magnetic means have a relative magnetic element disposed substantially transverse to the longitudinal development of the bars, which covers with its extension at least a substantial part of the width, from which the bars are taken.

To be more exact, the first magnetic means are associated with first movement means able to move them, at least in a first step of the removal and pick-up cycle, and at least for a part of their approach movement, in a direction substantially orthogonal to the plane on which the bundle of bars lies. The function of the first magnetic means is to lift at least the end parts of a plurality of bars with respect to the bundle.

According to a variant, the third magnetic means are provided in a fixed position, above the bundle of bars.

In this way, the ends of the bars are raised by the magnetic element of the first magnetic means, until the bars are disposed substantially adjacent on a single intermediate plane defined by the attractive surface of the third magnetic means. The second magnetic means then pick up the bars disposed adjacent on said single intermediate plane.

With the present invention, even if the bars are small diameter and are tangled and twisted in the bundle, after they have been positioned in the third magnetic means they can be selectively picked up and removed individually, or in a desired number of two or more, from the bundle, thanks to the cooperation between the three magnetic means and to the fact that they are picked up in three separate steps.

In particular, as we said, the first magnetic means pick up the bar or bars from the relative bundle, the third magnetic means form, in an intermediate step, the pick-up plane consisting of a plurality of bars adjacent to each other, and the second magnetic means interact with the third magnetic means in order to selectively pick up, and in an orderly and univocal manner, and without the possibility of any mistakes, overlapping or misalignments, one or more of said bars at a time, irrespective of their diameter, and to deposit them in the desired position, for example in a drawing element of the drawing unit of an operating machine located downstream.

According to a variant, the third magnetic means are positioned laterally with respect to the first and second magnetic means toward the inside of the bars, so as to hold the bars in the pick-up plane and prevent twisting of the bars.

According to a variant, the first magnetic means comprise two or more distinct magnetic elements able to cooperate with the bars at relative two or more different points on their length.

The second magnetic means are associated with second movement means able to move them, at least in a second step of the removal and pick-up cycle, in a direction substantially parallel, slant-wise, orthogonal or curvilinear, with respect to the plane on which the bundle of bars lies and/or with respect to the bars, temporarily co-planar, whose ends are held raised by the first magnetic means; said second magnetic means are suitable to selectively pick up from the third magnetic means the end part of one or more bars, advantageously one at a time, and to displace it and then release it in the desired position, in order to dispose it to be fed to the operating machine.

In a variant, the second magnetic means cooperate with at least a drawing unit, comprising rollers, grippers or other type, in cooperation with which the bar or bars, selectively picked up by the second magnetic means, are released and disposed so as then to be removed completely from the bundle and sent for working.

According to another variant, the second magnetic means cooperate with an accumulation unit of the device, which receives in sequence a desired number of bars so as to form a store, and simultaneously transfers them to the drawing unit.

The second movement means associated with the second magnetic means, in a variant, are able to allow a selective and controlled displacement thereof for the whole width at least of the third magnetic means, in order to allow the bar or bars to be selectively picked up in any position whatsoever of said third magnetic means.

According to a preferential form of embodiment, the second movement means associated with the second magnetic means comprise a linear actuator able to move the second magnetic means on a plane substantially parallel to the plane on which the bars lie and in a direction substantially orthogonal to the longitudinal development of the bars, from a first pick-up position, cooperating with the third magnetic means, to a second unloading position, cooperating with the drawing unit, or with another element of the operating machine. In this unloading position, the second magnetic means cooperate with unloading means, for example a stop element, which cause the bar to become detached and to fall from said second magnetic means, advantageously in a position of cooperation with a drawing element of the operating machine.

The second magnetic means are therefore able to pick up, for example one at a time, the bars whose ends are held raised by the third magnetic means, starting from the bar in the most lateral position, and then continuing until all the bars kept temporarily plane and adjacent by the third magnetic means have been picked up.

According to a variant, said second magnetic means are moved in a curvilinear trajectory with respect to the single plane defined by the third magnetic means, and can pick up the bars at any point of the attractive surface of the latter.

According to another variant, the first magnetic means are also moved, at least for part of their trajectory, in a curvilinear or slanted direction with respect to the plane on which the bars lie, and then are lowered substantially orthogonally to said plane in the step to pick up and raise the ends of the bars.

In a variant, the first, the second and/or the third magnetic means consist of electromagnets associated with selective feed means. According to a variant, the first, the second and/or the third magnetic means consist of permanent magnets.

In a further variant, the first, the second and/or the third magnetic means are mounted on a movable support suitable to be displaced on each occasion in correspondence with the feed zone of the operating machine where there is the bundle from which the bars to be worked are to be taken.

In another variant, in correspondence with, or in proximity with, the position where the bars are unloaded from said second magnetic means, there are means able to be selectively activated and suitable to correct possible defects in the positioning of the bars, for example due to even only partial misalignments or overlapping, in the drawing unit of the operating machine. The drawing unit can consist of rollers or, in a preferential embodiment, one or more grippers with alternating movement.

In another variant, in cooperation with the leading ends of the bars there is a header element, able to be selectively activated at least when a plurality of bars have been picked up by said first magnetic means, are raised with respect to the bundle and are disposed substantially on a single plane.

In a further variant, the stop element that causes the bar picked up by the second magnetic means to become detached and fall into the drawing unit of the operating machine has an at least partly curvilinear abutment surface in order to facilitate the detachment and to prevent the bar from rebounding.

In another variant, at least the first magnetic means are connected to the respective movement means by means of an articulated connection that facilitates a correct and complete pick-up of the ends of the bars from the bundle, even when there are containers with a curved or shaped bottom, and even when only a few residual bars remain in the container to be picked up.

In another variant, the third magnetic means are associated with respective movement means that allow the selective movement thereof, according to specific operating conditions.

### BRIEF DESCRIPTION OF THE DRAWINGS

These and other characteristics of the present invention will become apparent from the following description of some preferential forms of embodiment, given as a non-restrictive example, with reference to the attached drawings wherein:
- fig. 1 is a three-dimensional view of a feeder device for bars according to the present invention in a first step of its operating cycle;
- fig. 2 is a three-dimensional view of a feeder device for bars according to the present invention in a second step of its operating cycle;
- fig. 3 is a three-dimensional view of a feeder device for bars according to the present invention in a third step of its operating cycle.

### DETAILED DESCRIPTION OF A PREFERENTIAL FORM OF

### EMBODIMENT OF THE INVENTION

With reference to the attached figures, a feeder device 10 for bars 11 according to the invention is suitable to be located upstream of an operating machine such as a stirrup-making machine, bending machine, shaping machine, tying machine or any other machine of a similar type or not.

Of said operating machine the attached figures show a drawing unit, or drawer, 27, which in this case consists of rollers 26a, 26b, or a gripper with alternating movement. It is understood, however, that the drawing unit can be of any other type.

The feeder device 10 is suitable, without requiring any modification or reconfiguration, to operate on bars 11 substantially of any length and/or diameter, guaranteeing in any case to pick up the bars in an orderly and efficient manner, and to count them without mistakes.

The feeder device 10 is suitable to pick up, from a bundle 12 of bars lying at least partly in a housing seating 30, one or more bars 11 at a time to be sent to the operating machine. In this case, the housing seating 30 comprises a plurality of pockets, movable laterally, inside each of which the bars 11 of different sizes are disposed in separate bundles 12.

It comes within the field of the invention that the feeder device 10 is movable with respect to the pockets 30, or other housing seating for the bars 11, in order to move selectively according to the type or size of bars 11 to be picked up.

The possibility of moving the pockets 30 with respect to the feeder device 10, or vice versa, also allows to sequentially feed the machine with bars 11 having a different diameter, if the working program requires it, substantially without interrupting the work cycle of the machine downstream.

The feeder device 10 is mounted in this case on a supporting frame 18 and comprises first magnetic means 13 consisting of a first magnetic or electromagnetic element 14 disposed advantageously during use in proximity with one end of the bars 11 of the bundle 12.

It comes within the field of the invention that the first magnetic means 13 comprise two or more magnetic or electromagnetic elements 14, disposed at several distinct points on the length of the bars 11, advantageously near their front ends.

The first magnetic element 14 is located with a direction mainly transverse to the longitudinal development of the bars 11 lying in the respective pocket 30, and advantageously has a width such as to allow the simultaneous pick-up of a plurality of bars 11 from the bundle 12. The first magnetic element 14 is associated with a curvilinear arm 31 with the other end of which an actuator 15 is associated, disposed on a substantially horizontal plane.

In this embodiment, the first magnetic element 14 is mounted on the relative arm 31 by means of an articulated joint 42, which allows it a certain freedom of oscillation in order to facilitate the picking up of the bars 11 even when the pockets 30 have a curved and/or shaped bottom, and also when only a few residual bars 11 remain on the bottom of the pockets 30.

Thanks to the first linear actuator 15, for example of the fluid-dynamic type, the magnetic element 14 can be moved in a first substantially vertical operating direction, and correctly positioned in correspondence with the desired bundle 12 from which the bars 11 are to be picked up.

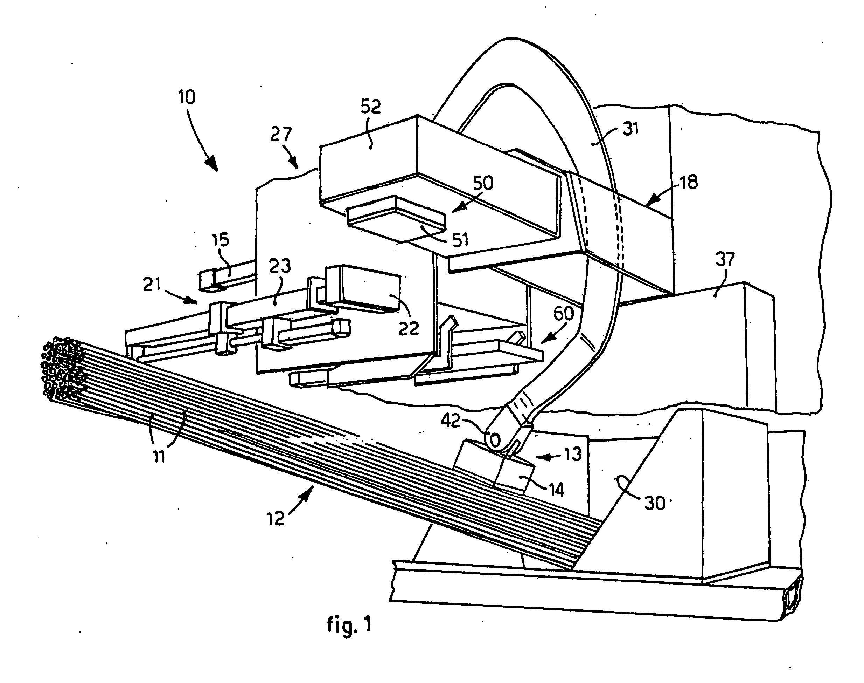

When the pick-up cycle is started, the magnetic element 14 is lowered toward the bundle 12, by means of the first linear actuator 15, so as to take its lower face, comprising the attractive surface, to a position such as to exert a magnetic attraction on the ends of the bars 11 located higher up in the bundle 12 (fig. 1). Subsequently, the magnetic element 14 is returned upward, magnetically lifting the ends of one layer of bars 11.

The device 10 also comprises second magnetic means 21 and third magnetic means 50.

In particular, the third magnetic means 50 comprise a relative magnetic element 51 mounted fixed on a supporting bracket 52 extending laterally from the supporting frame 18 toward the center of the bars 11. In this way the risk of the raised bars 11 twisting is reduced, and they are kept more aligned.

According to a variant, the third magnetic means 50 comprise two or more co-planar magnetic elements 51, able to act at one or more distinct points on the length of the bars 11.

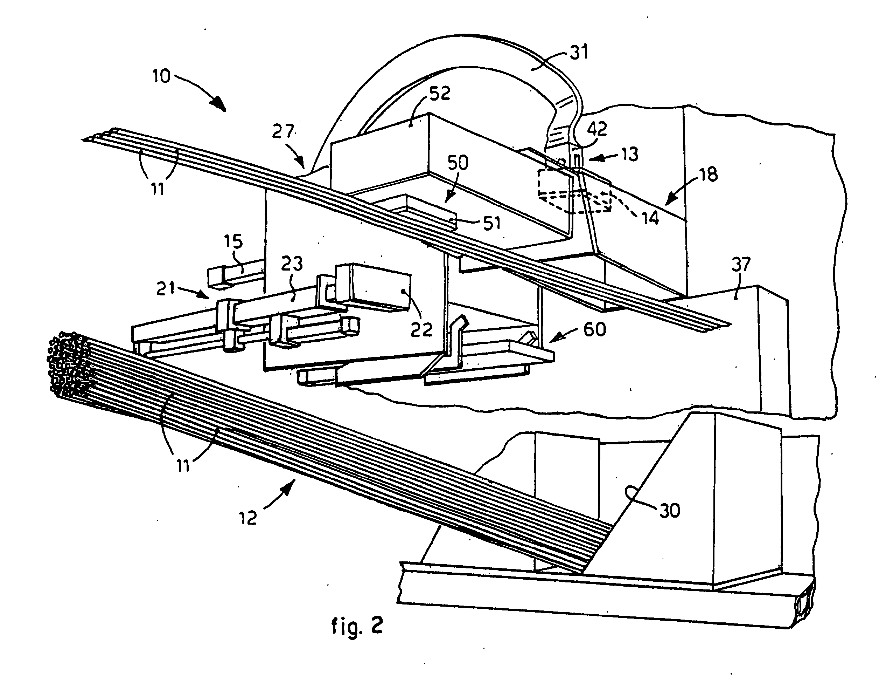

The magnetic element 51 has a substantially plane attractive surface, facing downward, so as to cooperate with the bars 11 raised by the first magnetic means 13 and to keep them temporarily disposed substantially plane, adjacent to each other (fig. 2).

Advantageously the first magnetic means 13 have a travel upward such as to exceed in height the magnetic element 51, so as to be magnetically dis-associated from the raised bars 11, and to allow only the magnetic element 51 to keep the bars 11 adjacent and substantially plane.

According to a variant, the first magnetic means 13 have a travel upward such as to take the first magnetic element 14 substantially co-planar with the magnetic element 51, so as to define a double magnetic support for the bars 11.

When the bars 11 are kept adjacent and substantially plane by the third magnetic means 50, the second magnetic means 21 are activated, which comprise a second magnetic element 22 mounted at the end of a second linear actuator 23 mounted, in turn, on the supporting frame 18.

Here too, it comes within the field of the invention that the second magnetic means 21 comprise two or more magnetic elements 22 able to act at two or more distinct points on the length of the bars 11.

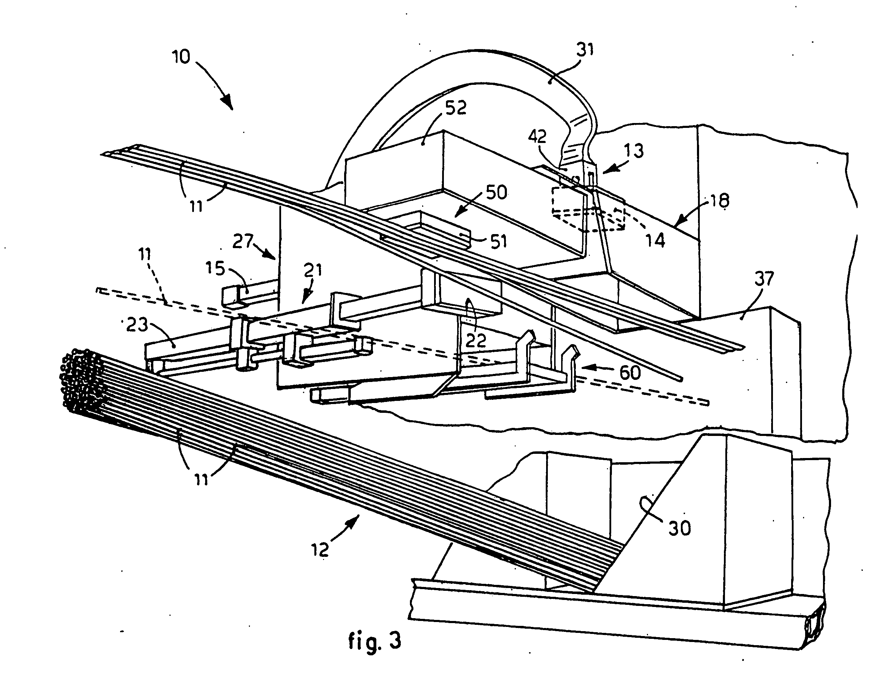

The second linear actuator 23 is able to act in a direction substantially perpendicular to the longitudinal development of the bars 11, so as to move, in this case horizontally, the second magnetic element 22 from a first advanoed pick-up position (fig. 3), in which it moves into cooperation with the attractive surface of the magnetic element 51 in order to pick up from it one bar 11 at a time, to a second retracted release position.

In the second position, it releases the end of the specific bar or bars 11, which it has picked up from the magnetic element 51, in correspondence with an accumulation unit 60 able to receive in sequence from the second magnetic means 21 a desired number of bars 11 so as to form a store, and to transfer the bars 11 simultaneously into the drawing unit 27.

Advantageously, the second magnetic means 21, the third magnetic means 50 and the first magnetic means 13 are staggered with respect to each other on the length of the bars 11, so that, when the second magnetic element 22 is in its pick-up position, it does not interfere either with the first magnetic element 14, or with the magnetic element 51.

In the embodiment shown here, when the second magnetic element 22 performs an empty travel without meeting bars 11 on the pick-up plane defined by the magnetic element 51, consent is given for a new descent of the first magnetic element 14 toward the bundle of bars 11 to pick up a new bar or bars 11.

In this case, downstream of the magnetic elements 14, 51 and 22 there is a header element 37, associated with a movement actuator 38. The function of the header element 37 is to align the bars 11 with respect to each other, by acting repeatedly in abutment against the relative ends, after they have been picked up by the first magnetic element 14 and are kept raised with respect to the bundle 12.

It is clear, however, that modifications and/or additions of parts may be made to the feeder device 10 as described heretofore, without departing from the field and scope of the present invention.

For example, a variant of the device may provide that, in association with the magnetic element 51 there are stop elements which allow to discharge the bars 11 which have remained gripped on said magnetic element 51 and to make them fall into the relative bundle 12, once the work cycle of the machine has been stopped. The discharge of the bars 11 can also be obtained, when electromagnetic elements are used, by temporarily de-activating the electric feed to said magnetic element 51.

It is also clear that, although the present invention has been described with reference to some specific examples, a person of skill in the art shall certainly be able to achieve many other equivalent forms of feeder device for bars and relative feed method, having the characteristics as set forth in the claims and hence all coming within the field of protection defined thereby.

## Claims

1. Feeder device for bars, able to pick up and remove selectively from a bundle (12) at least one bar (11) in order to dispose it for use in an operating machine, the device comprising first magnetic means (13) able to separate from said bundle (12) at least an end segment of a plurality of bars (11) and to dispose at least the end segments of said plurality of bars (11) on a plane distanced with respect to said bundle (12), and second magnetic means (21) able to cooperate with said first magnetic means (13) so as to pick up at least one bar (11) at a time from said plurality of bars (11) and to prepare it for sending to said operating machine, **characterized in that** it also comprises third magnetic means (50) able to temporarily hold the bar or bars (11) picked up by said first magnetic means (13), forming substantially a pick-up plane from which said second magnetic means (21) selectively pick up the bars to be sent to the machine.

2. Device as in claim 1, **characterized in that** said third magnetic means (50) are mounted in a fixed position above said bundle (12) from which said bars (11) are taken.

3. Device as in claim 1 or 2, **characterized in that** said first magnetic means (13) are associated with movement means (15) able to move them, at least in a first step of the removal and pick-up cycle and at least for a part of their movement, in a first operating direction substantially orthogonal to a plane on which said bundle (12) of bars (11) lies, in order to raise the end segments of said plurality of bars (11) with respect to said bundle (12).

4. Device as in any claim hereinbefore, **characterized in that** said third magnetic means (50) comprise a magnetic element (51) able to temporarily keep said bars (11) adjacent and substantially plane, at least during an intermediate step of the removal and pick-up step.

5. Device as in claim 4, **characterized in that** said magnetic element (51) is mounted fixed in a lateral position to said first magnetic means (13) and said second magnetic means (21), toward the center of said bars (11).

6. Device as in any claim hereinbefore, **characterized in that** said second magnetic means (21) are associated with second movement means (23) able to move them, at least in a second step of the removal and pick-up cycle, in a second operating direction parallel, curvilinear or slant-wise with respect to said bars (11) kept adjacent and substantially plane by said third magnetic means (50) in order to pick up therefrom one or more bars (11) and to send them to the machine.

7. Device as in claim 6, **characterized in that** said second magnetic means (21) have a first advanced pick-up position in which they cooperate with said third magnetic means (50) in order to pick up therefrom said at least one bar (11), and a second retracted position in which the bars (11) are sent to the machine.

8. Device as in claim 7, **characterized in that** in said retracted position said second magnetic means (21) are disposed substantially in correspondence with a drawing unit (27) of said operating machine, into which said at least one bar (11) is able to be unloaded.

9. Device as in claim 8, **characterized in that** it comprises an accumulation unit (60) able to receive in sequence from said second magnetic means (21) a desired number of bars (11) to form a store, and to transfer said desired number of bars (11) simultaneously to said drawing unit (27).

10. Device as in any claim hereinbefore, **characterized in that**, in cooperation with the leading ends of said bars (11), there is a header element (37) able to be selectively activated at least when a plurality of bars (11) have been picked up by said first magnetic means (13), are raised with respect to said bundle (12) and are disposed substantially on a single plane on the third magnetic means (50).

11. Device as in any claim hereinbefore, **characterized in that** said first magnetic means (13) comprise a magnetic element (14) with a size, in a direction transverse to the longitudinal development of the bars (11), at least equal to the width of said bundle (12).

12. Device as in claim 11, **characterized in that** said magnetic element (14) is mounted on a relative supporting arm (31) by means of an articulated connection (42).

13. Device as in any claim hereinbefore, **characterized in that** the first (13), the second (21) and/or the third (50) magnetic means consist of electromagnets associated with selective feed means.

14. Device as in any claim from 1 to 12, **characterized in that** the first (13), the second (21) and/or the third (50) magnetic means consist of permanent magnets.

15. Method to feed bars (11) by picking up and selectively removing from a bundle (12) at least one bar (11) in order to prepare it for use in an operating machine, comprising a first step in which first magnetic means (13) are brought near said bundle (12) in order to magnetically attract an end segment of a plurality of bars (11) and to distance them from said bundle (12), and a second step in which second magnetic means (21) are moved to cooperate with said first magnetic means (13) and to pick up at least one of said plurality of bars (11), and to prepare it for sending to said operating machine, **characterized in that** it comprises at least an intermediate step between said first step and said second step, in which by means of third magnetic means (50) the bar or bars (11) picked up by said first magnetic means (13) are temporarily held, substantially forming a intermediate pick-up plane from which said second magnetic means (21) selectively pick up the bars to be sent to the machine.

16. Method as in claim 15, **characterized in that** said second magnetic means (21) are moved from a first advanced pick-up position cooperating with said third magnetic means (50) in order to pick up said at least one bar (11) to a second retracted position in which they cooperate with a drawing unit (27) of said operating machine in order to release said at least one bar (11) into said drawing unit (27).

17. Method as in claim 16, **characterized in that**, between said first step and said second step it provides at least a heading step performed by a header element (37) in order to make the longitudinal positioning of said plurality of bars (11) equal.

## Patentansprüche

1. Zuführvorrichtung für Stangen, die in der Lage ist, wahlweise mindestens eine Stange (11) aus einem Bündel (12) aufzunehmen und zu entnehmen, um diese zur Verwendung in einer Bearbeitungsmaschine anzuordnen, wobei die Vorrichtung aufweist: erste Magnetmittel (13), die in der Lage sind, zumindest einen Endabschnitt einer Mehrzahl von Stangen (11) von dem Bündel (12) zu trennen und zumindest die Endabschnitte der Mehrzahl von Stangen (11) auf einer Ebene anzuordnen, die bezüglich des Bündels (12) im Abstand angeordnet ist, und zweite Magnetmittel (21), die in der Lage sind, mit den ersten Magnetmitteln (13) zusammenzuwirken, um auf einmal mindestens eine Stange (11) aus der Mehrzahl von Stangen (11) aufzunehmen und sie zum Senden an die Bearbeitungsmaschine vorzubereiten, **dadurch gekennzeichnet, dass** sie ferner dritte Magnetmittel (50) aufweist, die in der Lage sind, die Stange oder Stangen (11), die von den ersten Magnetmitteln (13) aufgehoben wird/werden, vorübergehend zu halten, wodurch im Wesentlichen eine Aufnahme-Ebene gebildet wird, aus der die zweiten Magnetmittel (21) die an die Maschine zu sendenden Stangen wahlweise aufnehmen.

2. Vorrichtung gemäß Anspruch 1, **dadurch gekennzeichnet, dass** die dritten Magnetmittel (50) in einer festen Position über dem Bündel (12) angeordnet sind, aus dem die Stangen (11) entnommen werden.

3. Vorrichtung gemäß Anspruch 1 oder 2, **dadurch gekennzeichnet, dass** die ersten Magnetmittel (13) Bewegungsmitteln (15) zugeordnet sind, die in der Lage sind, diese zumindest in einem ersten Schritt des Entnahme- und Aufnahmekreislaufs und zumindest für einen Teil ihrer Bewegung in einer ersten Bearbeitungsrichtung im Wesentlichen orthogonal zu einer Ebene, auf der das Bündel (12) von Stangen (11) liegt, zu bewegen, um die Endabschnitte der Mehrzahl von Stangen (11) bezüglich des Bündels (12) anzuheben.

4. Vorrichtung gemäß irgendeinem vorhergehenden Anspruch, **dadurch gekennzeichnet, dass** die dritten Magnetmittel (50) ein Magnetelement (51) aufweisen, das in der Lage ist, die Stangen (11) zumindest während eines Zwischenschrittes des Entnahme- und Aufnahmeschrittes vorübergehend benachbart und im Wesentlichen eben zu halten.

5. Vorrichtung gemäß Anspruch 4, **dadurch gekennzeichnet, dass** das Magnetelement (51) fest in einer Position seitlich zu den ersten Magnetmitteln (13) und den zweiten Magnetmitteln (21) in Richtung zu der Mitte der Stangen (11) montiert ist.

6. Vorrichtung gemäß irgendeinem vorhergehenden Anspruch, **dadurch gekennzeichnet, dass** die zweiten Magnetmittel (21) zweiten Bewegungsmitteln (23) zugeordnet sind, die in der Lage sind, diese mindestens in einem zweiten Schritt des Entnahme- und Aufnahmekreislaufs in einer zweiten Bearbeitungsrichtung bezüglich der von den dritten Magnetmitteln (50) benachbart und im Wesentlichen eben gehalten Stangen (11) parallel, krummlinig oder schräg zu bewegen, um davon eine oder mehr Stangen (11) aufzunehmen und sie an die Maschine zu senden.

7. Vorrichtung gemäß Anspruch 6, **dadurch gekennzeichnet, dass** die zweiten Magnetmittel (21) eine erste, vorgerückte Aufnahmeposition, in der sie mit den dritten Magnetmitteln (50) zusammenwirken, um daraus die mindestens eine Stange (11) aufzunehmen, und eine zweite, eingezogene Position aufweisen, in der die Stangen (11) an die Maschine gesendet werden.

8. Vorrichtung gemäß Anspruch 7, **dadurch gekennzeichnet, dass** in der eingezogenen Position die zweiten Magnetmittel (21) im Wesentlichen mit einer Zieheinrichtung (27) der Bearbeitungsmaschine korrespondierend angeordnet sind, in die die mindestens eine Stange (11) entladen werden kann.

9. Vorrichtung gemäß Anspruch 8, **dadurch gekennzeichnet, dass** sie eine Sammeleinheit (60) aufweist, die in der Lage ist, aus den zweiten Magnetmitteln (21) nacheinander eine gewünschte Anzahl von Stangen (11) aufzunehmen, um ein Lager zu bilden, und um die gewünschte Anzahl von Stangen (11) gleichzeitig an die Zieheinrichtung (27) zu übermitteln.

10. Vorrichtung gemäß irgendeinem vorhergehenden Anspruch, **dadurch gekennzeichnet, dass** in Zusammenwirkung mit den Führungsenden der Stangen (11) ein Kopfelement (37) vorgesehen ist, das, zumindest wenn eine Mehrzahl von Stangen (11) von den ersten Magnetmitteln (13) ergriffen wurde, bezüglich des Bündels (12) angehoben ist und im Wesentlichen auf einer einzigen Ebene an den dritten Magnetmitteln (50) angeordnet ist, wahlweise aktiviert werden kann.

11. Vorrichtung gemäß irgendeinem vorhergehenden Anspruch, **dadurch gekennzeichnet, dass** die ersten Magnetmittel (13) ein Magnetelement (14) mit einer Größe in einer Richtung quer zu dem Längsverlauf der Stangen (11) aufweisen, die zumindest gleich der Breite des Bündels (12) ist.

12. Vorrichtung gemäß Anspruch 11, **dadurch gekennzeichnet, dass** das Magnetelement (14) mittels einer Gelenkverbindung (42) an einem relativen Stützarm (31) montiert ist.

13. Vorrichtung gemäß irgendeinem vorhergehenden Anspruch, **dadurch gekennzeichnet, dass** die ersten (13), die zweiten (21) und/oder die dritten (50) Magnetmittel aus Elektromagneten gebildet sind, die selektiven Zuführmitteln zugeordnet sind.

14. Vorrichtung gemäß einem der Ansprüche 1 bis 12, **dadurch gekennzeichnet, dass** die ersten (13), die zweiten (21) und/oder die dritten (50) Magnetmittel aus Dauermagneten gebildet sind.

15. Verfahren zum Zuführen von Stangen (11) durch Aufnehmen und wahlweises Entnehmen mindestens einer Stange (11) aus einem Bündel (12), um diese zur Verwendung in einer Bearbeitungsmaschine vorzubereiten, aufweisend einen ersten Schritt, in dem erste Magnetmittel (13) in die Nähe des Bündels (12) gebracht werden, um einen Endabschnitt einer Mehrzahl von Stangen (11) magnetisch anzuziehen und sie von dem Bündel (12) in Abstand zu bringen, und einen zweiten Schritt, in dem zweite Magnetmittel (21) bewegt werden, um mit den ersten Magnetmitteln (13) zusammenzuwirken und mindestens eine aus der Mehrzahl von Stangen (11) aufzunehmen und sie zum Senden an eine Bearbeitungsmaschine vorzubereiten, **dadurch gekennzeichnet, dass** es mindestens einen Zwischenschritt zwischen dem ersten Schritt und dem zweiten Schritt aufweist, in dem mittels dritter Magnetmittel (50) die Stange oder Stangen (11), die von den ersten Magnetmitteln (13) aufgenommen wird/werden, vorübergehend gehalten wird/werden, wobei im Wesentlichen eine Zwischen-Aufnahme-Ebene gebildet wird, aus der die zweiten Magnetmittel (21) die an die Maschine zu sendenden Stangen wahlweise aufnehmen.

16. Verfahren gemäß Anspruch 15, **dadurch gekennzeichnet, dass** die zweiten Magnetmittel (21) aus einer ersten, vorgerückten Aufnahme-Position, in der sie mit den dritten Magnetmitteln (50) zusammenwirken, um die mindestens eine Stange (11) aufzunehmen, in eine zweite, eingezogene Position bewegt werden, in der sie mit einer Zieheinrichtung (27) der Bearbeitungsmaschine zusammenwirken, um die mindestens eine Stange (11) in die Zieheinrichtung (27) abzugeben.

17. Verfahren gemäß Anspruch 16, **dadurch gekennzeichnet, dass** es zwischen dem ersten Schritt und dem zweiten Schritt mindestens einen Kopfausrichtungsschritt bereitstellt, der mittels eines Kopfelements (37) durchgeführt wird, um die Längspositionierung der Mehrzahl von Stangen (11) anzugleichen.

## Revendications

1. Dispositif d'acheminement pour barres, capable de prélever et d'enlever sélectivement d'un ensemble (12) au moins une barre (11), afin de la mettre en place pour une utilisation dans une machine opérationnelle, le dispositif comprenant des premiers moyens magnétiques (13) capables de séparer dudit ensemble (12) au moins un segment d'extrémité d'une pluralité de barres (11) et de disposer au moins les segments d'extrémité de ladite pluralité de barres (11) sur un plan éloigné relativement audit ensemble (12) et des seconds moyens magnétiques (21) capables de coopérer avec lesdits premiers moyens magnétiques (13), de façon à prélever au moins une barre (11) à la fois de ladite pluralité de barres (11) et de la préparer pour l'envoi à ladite machine opérationnelle, **caractérisé en ce qu'**il comprend également des troisièmes moyens magnétiques (50) capables de maintenir temporairement la ou les barres (11) prélevée(s) par lesdits premiers moyens magnétiques (13), formant sensiblement un plan de prélèvement d'où lesdits seconds moyens magnétiques (21) prélèvent sélectivement les barres à envoyer à la machine.

2. Dispositif selon la revendication 1, **caractérisé en ce que** lesdits troisièmes moyens magnétiques (50) sont montés dans une position fixe au dessus dudit ensemble (12) d'où sont prélevées lesdits barres (11).

3. Dispositif selon la revendication 1 ou 2, **caractérisé en ce que** lesdits premiers moyens magnétiques (13) sont associés à des moyens de mouvement (15), capables de les déplacer, au moins dans une première étape du cycle d'enlèvement et de prélèvement et au moins pour une partie de leur mouvement, dans une première direction opérationnelle sensiblement perpendiculaire à un plan sur lequel s'appuie ledit ensemble (12) de barres (11), afin de lever les segments d'extrémité de ladite pluralité de barres (11) relativement audit ensemble (12).

4. Dispositif selon l'une quelconque des revendications ci-dessus, **caractérisé en ce que** lesdits troisièmes moyens magnétiques (50) comprennent un élément magnétique (51) capable de maintenir temporairement lesdites barres (11) adjacentes et sensiblement planes, au moins pendant une étape intermédiaire de l'étape d'enlèvement et de prélèvement.

5. Dispositif selon la revendication 4, **caractérisé en ce que** ledit élément magnétique (51) est monté de manière fixe dans une position latérale par rapport audit premier moyen magnétique (13) et ledit second moyen magnétique (21) vers le centre desdites barres (11).

6. Dispositif selon l'une quelconque des revendications précédentes, **caractérisé en ce que** lesdits seconds moyens magnétiques (21) sont associés à des seconds moyens de mouvement (23) capables de les déplacer, au moins dans une seconde étape du cycle d'enlèvement et de prélèvement, dans une seconde direction opérationnelle parallèle, curviligne ou oblique par rapport auxdites barres (11) maintenues adjacentes et sensiblement planes par lesdits troisièmes moyens magnétiques (50), afin d'y prélever une ou plusieurs barres (11) et de les envoyer à la machine.

7. Dispositif selon la revendication 6, **caractérisé en ce que** lesdits seconds moyens magnétiques (21) ont une première position de prélèvement avancée, dans laquelle ils coopèrent avec lesdits troisièmes moyens magnétiques (50), afin d'y prélever ladite au moins une barre (11), et une seconde position rétractée, dans laquelle les barres (11) sont envoyées à la machine.

8. Dispositif selon la revendication 7, **caractérisé en ce que**, dans ladite position rétractée, lesdits seconds moyens magnétiques (21) sont disposés sensiblement au niveau d'une unité de traction (27) de ladite machine opérationnelle, dans laquelle ladite au moins une barre (11) est capable d'être déchargée.

9. Dispositif selon la revendication 8, **caractérisé en ce qu'**il comprend une unité d'accumulation (60) capable de recevoir en séquence depuis lesdits seconds moyens magnétiques (21) un nombre souhaité de barres (11) pour former un magasin, et de transférer ledit nombre souhaité de barres (11) simultanément ladite unité de traction (27).

10. Dispositif selon l'une quelconque des revendications précédentes, **caractérisé en ce que**, en coopération avec les extrémités avant desdites barres (11), il existe un élément de tête (37) capable d'être sélectivement activé au moins quand plusieurs barres (11) ont été prélevées par lesdits premiers moyens magnétiques (13), sont levées relativement audit ensemble (12) et sont disposées sensiblement sur un plan unique sur les troisièmes moyens magnétiques (50).

11. Dispositif selon l'une quelconque des revendications précédentes, **caractérisé en ce que** lesdits premiers moyens magnétiques (13) comprennent un élément magnétique (14) ayant une taille, dans une direction transversale au développement longitudinal des barres (11), au moins égale à la largeur dudit ensemble (12).

12. Dispositif selon la revendication 11, **caractérisé en ce que** ledit élément magnétique (14) est monté sur un bras de support correspondant (31), au moyen d'une connexion articulée (42).

13. Dispositif selon l'une quelconque des revendications ci-dessus, **caractérisé en ce que** les premiers (13), les seconds (21) et/ou les troisièmes (50) moyens magnétiques sont constitués d'électroaimants associés à des moyens d'alimentation sélectifs.

14. Dispositif selon l'une quelconque des revendications 1 à 12, **caractérisé en ce que** les premiers (13), les seconds (21) et/ou les troisièmes (50) moyens magnétiques sont constitués d'aimants permanents.

15. Procédé d'acheminement de barres (11) par prélèvement et enlèvement sélectif d'un ensemble (12) d'au moins une barre (11), afin de la préparer pour l'utilisation dans une machine opérationnelle, comprenant une première étape dans laquelle des premiers moyens magnétiques (13) sont amenés près dudit ensemble (12), afin d'attirer magnétiquement un segment final d'une pluralité de barres (11) et de les éloigner dudit ensemble (12), et une seconde étape dans laquelle des seconds moyens magnétiques (21) sont déplacés pour coopérer avec lesdits premiers moyens magnétiques (13) et pour prélever au moins une parmi la pluralité de barres (11), et pour la préparer pour l'envoi à ladite machine opérationnelle, **caractérisé en ce qu'**il comprend au moins une étape intermédiaire, entre ladite première étape et ladite seconde étape, dans laquelle, par le biais de troisièmes moyens magnétiques (50), la ou les barres(s) (11) prélevée(s) par lesdits premiers moyens magnétiques (13) est (sont) temporairement maintenue(s), formant sensiblement un plan de prélèvement intermédiaire d'où lesdits seconds moyens magnétiques (21) prélèvent sélectivement les barres à envoyer à la machine.

16. Procédé selon la revendication 15, **caractérisé en ce que** lesdits seconds moyens magnétiques (21) sont déplacés d'une première position de prélèvement avancée coopérant avec lesdits troisièmes moyens magnétiques (50), afin de prélever ladite au moins une barre (11), vers une seconde position rétractée, dans laquelle ils coopèrent avec une unité de traction (27) de ladite machine opérationnelle, afin de relâcher ladite au moins une barre (11) dans ladite unité de traction (27).

17. Procédé selon la revendication 16, **caractérisé en ce que**, entre ladite première étape et ladite seconde étape, il propose au moins une étape d'avancement réalisée par un élément de tête (37), afin de permettre le positionnement longitudinal égal de ladite pluralité de barres (11).
